# EUROPEAN PATENT APPLICATION

(11) **EP 3 358 658 A1**
(43) Date of publication of application: **08.08.2018**
(21) Application number: 16851938.7
(22) Date of filing: 01.10.2016
(51) Int. Cl.: H01M 4/587, H01M 4/36, H01M 4/38

(54) **GRANULAR COMPOSITE FOR MANUFACTURING NEGATIVE ELECTRODE OF LITHIUM-ION SECONDARY CELL**

(30) Priority: 01.10.2015 JP 2015196271
(71) Applicant: Showa Denko K.K., Tokyo 105-8518 (JP)
(72) Inventor: KURITA, Takayuki, Tokyo 105-8518 (JP); MATSUO, Akira, Tokyo 105-8518 (JP); ISHII, Nobuaki, Tokyo 105-8518 (JP)
(74) Representative: Strehl Schübel-Hopf & Partner
(86) International application number: PCT/JP2016/079194
(87) International publication number: WO 2017/057769

(57) **Abstract**

A negative electrode for a lithium ion secondary battery in which an electrode layer and a collector are laminated is obtained by a method comprising: mixing particles (A) composed of a substance comprising an element capable of intercalating and deintercalating lithium ions and comprising no graphite, particles (B) composed of a substance comprising graphite, carbonaceous fibers (C), and a polymer (D) comprising a polysaccharide comprising an unsubstituted or substituted glucopyranose ring or a derivative of the polysaccharide and having a viscosity in 1 mass% aqueous solution at 25°C of 300-6,000 mPa·s to obtain a granular composite in which each one of the particles (A) and each one of the carbonaceous fibers (C) have contact with each other through the polymer (D) to be integrated, thereby forming a substructure (S), at least a part of surface of each one of the particles (B) is covered with the substructure (S), and each one of the particles (B) has contact with each other through the substructure (S); mixing a liquid medium, the granular composite and a binder to obtain slurry or paste; and allowing the slurry or the paste to adhere to the collector.

## Description

### TECHNICAL FIELD

The present invention relates to a granular composite for manufacturing a negative electrode of a lithium ion secondary battery, and a method for manufacturing the negative electrode of the lithium ion secondary battery. In more detail, the present invention relates to a granular composite used for manufacturing a negative electrode capable of obtaining a lithium ion secondary battery having a high energy density and capability of balancing a high initial capacity and a high capacity retention ratio, and a method for manufacturing the negative electrode for the lithium ion secondary battery using the granular composite.

### BACKGROUND ART

Multi-functionalization of a portable electronic device has progressed faster than power saving of an electronic component, and thus power consumption in the portable electronic device is increasing. Therefore, achievement of a higher capacity and a smaller size of a lithium ion secondary battery being a main power supply of the portable electronic device is further strongly required than ever before. Moreover, a demand for an electric vehicle is growing, and achievement of the higher capacity is also strongly required for the lithium ion secondary battery used therefor.

In order to respond to such a demand, proposals have been made on a negative electrode material obtained by compositing Si particles and a carbon material. For example, Patent Document 1 discloses a negative electrode material for a lithium ion secondary battery, comprising: a support around which electric conductive carbon fibers are entangled with each other, and gaps into which a fluid can be permeated are formed between the carbon fibers; and silicon/amorphous carbon composite particles that enter into places between the gaps, are dispersed into the support, and are supported on the support, wherein the silicon/amorphous carbon composite particles are composed of silicon particles and amorphous carbon, and include surface attachments adhered on surface of the silicon particles.

Patent Document 2 discloses a negative electrode material for a lithium ion secondary battery, composed of a mixture of particles comprising an element capable of intercalating and deintercalating lithium, and carbon particles comprising a graphite material, wherein the carbon particles have an aspect ratio of not less than 1 and not more than 5 calculated on an optical microscope image, a 50% particle diameter of 2 to 40 µm in a volume-based cumulative particle size distribution as measured by a laser diffraction particle size distribution measuring device, and a bulk density of not less than 1.0 g/cm³ and not more than 1.35 g/cm³ upon tapping the particles 400 times ; and the graphite material has a ratio I_{D}/I_{G} (R value) of not less than 0.01 and not more than 0.2 wherein the ratio I_{D/}I_{G} is intensity (I_{D}) of a peak in the vicinity of 1,360 cm⁻¹ to intensity (I_{G}) of a peak in the vicinity of 1,580 cm⁻¹ as measured by Raman spectroscopy, a coefficient of thermal expansion (CTE) between 30°C and 100°C of not less than 4.0 × 10⁻⁶/°C and not more than 5.0 × 10⁻⁶/°C, and an interplanar spacing d₀₀₂ of 0.3340 nm to 0.3380 nm as obtained from a 002 diffraction line in powder X-ray diffractometry, and the graphite material is obtained by heat-treating petroleum-based coke and/or coal-based coke at 2,500°C or higher.

Patent Document 3 discloses a composite material comprising carbon fibers and complex oxide particles, wherein at least a part of surface of the carbon fibers and the complex oxide particles is coated with carbon coating, and the carbon coating is a non-powder coating.

Patent Document 4 discloses a composite body in which Si particles are included within partially-peeled flaked graphite having a structure that graphenes are partially peeled.

Patent Document 5 discloses a negative electrode active material for a lithium secondary battery, comprising amorphous carbon having pores therein and carbonized nano-particles dispersed in the pores. The carbonized nano-particles comprise an Si core and a block copolymer shell, wherein the shell is formed by establishing a spherical micelle structure of a block copolymer around the Si core, and carbonizing the block copolymer to obtain the carbonized nano-particles, and the block copolymer comprises a block having high affinity for Si and a block having low affinity for Si.

### CITATION LIST

### PATENT LITERATURES

Patent Document 1 : JP 2013-089403 A
Patent Document 2 : JP 2013-222641 A
Patent Document 3 : JP 2011-529257 A
Patent Document 4 : JP 2014-197551 A
Patent Document 5 : JP 2014-224028 A

### SUMMARY OF THE INVENTION

### PROBLEM TO BE RESOLVED BY THE INVENTION

The main subject of the present invention is to provide a lithium ion secondary battery having a high energy density and capability of balancing a high initial capacity and a high capacity retention ratio, a granular composite to be used for manufacturing a negative electrode from which the lithium ion secondary battery can be obtained, and a method for manufacturing the negative electrode for the lithium ion secondary battery using the granular composite.

### MEANS FOR SOLVING THE PROBLEMS

The research has been diligently conducted in order for the subject to be achieved, resulting in completing the present invention including the following embodiments.
[1] A granular composite for use in manufacturing a negative electrode of a lithium ion secondary battery, the composite comprising:
   particles (A) comprised of a substance comprising an element capable of intercalating and deintercalating lithium ions and comprising no graphite;
   particles (B) composed of a substance comprising graphite;
   carbonaceous fibers (C); and
   a polymer (D) comprising a polysaccharide comprising an unsubstituted or substituted glucopyranose ring or a derivative of the polysaccharide, having a viscosity in 1 mass% aqueous solution at 25°C of not less than 300 mPa·s and not more than 6,000 mPa·s, wherein an amount of the polymer (D) is not less than 2 parts by mass and not more than 50 parts by mass relative to 100 parts by mass of the total amount of the particles (A), the particles (B) and the carbonaceous fibers (C);
   each one of the particles (A) and each one of the carbonaceous fibers (C) have contact with each other through the polymer (D) to be integrated, thereby forming a substructure (S),
   at least a part of surface of each one of the particles (B) is covered with the substructure (S), and each one of the particles (B) has contact with each other through the substructure (S).
[2] The granular composite according to the embodiment [1], wherein the unsubstituted or substituted glucopyranose ring is a polar functional group-substituted glucopyranose ring.
[3] The granular composite according to the embodiment [2], wherein the polar functional group-substituted glucopyranose ring is a carboxyalkyl group-substituted glucopyranose ring or a hydroxyalkyl group-substituted glucopyranose ring.
[4] The granular composite according to the embodiment [1], wherein the polymer (D) comprises at least one selected from the group consisting of carboxyalkyl cellulose, alkyl cellulose and hydroxyalkyl cellulose.
[5] The granular composite according to any one of the embodiments [1] to [4], wherein a 90% diameter of the particles (A) in a volume-based cumulative particle size distribution of primary particles is not more than 200 nm.
[6] The granular composite according to any one of the embodiments [1] to [5], wherein the carbonaceous fibers (C) comprise carbon nanotubes having an average fiber diameter of not less than 2 nm and not more than 40 nm and an aspect ratio of not less than 10 and not more than 15,000.
[7] The granular composite according to any one of the embodiments [1] to [6], wherein an amount of the particles (A) is not less than 10 parts by mass and not more than 350 parts by mass based on 100 parts by mass of the particles (B).
[8] The granular composite according to any one of the embodiments [1] to [7], wherein an amount of the carbonaceous fibers (C) is not less than 0.1 part by mass and not more than 20 parts by mass based on 100 parts by mass of the total amount of the particles (A) and the particles (B).
[9] The granular composite according to any one of the embodiments [1] to [8], wherein the particles (A) comprise at least one element selected from the group consisting of Si, Sn, Ge, Al and In.
[10] The granular composite according to any one of the embodiments [1] to [9], wherein a tap density of the granular composite is 0.40 to 0.95 g/cm³.
[11] The granular composite according to any one of the embodiments [1] to [10], wherein a BET specific surface area of the granular composite is not more than 10 ₘ²/g.
[12] Slurry or paste, comprising the granular composite according to any one of the embodiments [1] to [11], and a binder.
[13] A method for manufacturing a negative electrode for a lithium ion secondary battery, comprising:
   mixing particles (A) composed of a substance comprising an element capable of intercalating and
   deintercalating lithium ions and comprising no graphite, particles (B) composed of a substance comprising graphite, carbonaceous fibers (C), and a polymer (D) composed of a polysaccharide comprising an unsubstituted or substituted glucopyranose ring or a derivative of the polysaccharide and having a viscosity in 1 mass% aqueous solution at 25°C of not less than 300 mPa·s and not more than 6,000 mPa·s, in which an amount of the polymer (D) is not less than 2 parts by mass and not more than 50 parts by mass based on 100 parts by mass of the total amount of the particles (A), the particles (B) and the carbonaceous fibers (C); to obtain a granular composite wherein each one of the particles (A) and each one of the carbonaceous fibers (C) have contact with each other through the polymer (D) to be integrated, thereby forming a substructure (S), at least a part of surface of each one of the particles (B) is covered with the substructure (S), and the each one of the particles (B) has contact with each other through the substructure (S);
      mixing a liquid medium, the granular composite and a binder to obtain slurry or paste; and allowing the slurry or the paste to adhere to a current collector.
[14] The method according to the embodiment [13], further comprising heat-treating petroleum-based coke and/or coal-based coke at 2,500°C or higher to obtain the particles (B).
[15] A lithium ion secondary battery, comprising a negative electrode formed by lamination of a current collector and an electrode layer comprising the granular composite according to any one of the embodiments [1] to [11] and a binder.
[16] The lithium ion secondary battery according to the embodiment [15], wherein an apparent density of the electrode layer is 1.2 to 1.8 g/cm³.

### ADVANTAGEOUS EFFECTS OF THE INVENTION

The granular composite of the present invention can cause significant reduction of electric resistance of a negative electrode for a lithium ion secondary battery, and is excellent in an effect of suppressing negative electrode structural collapse caused by expansion and contraction of the particles (A). Further, the granular composite of the present invention can cause significant improvement in coulombic efficiency. The granular composite of the present invention is effective in improving characteristics of the lithium ion secondary battery, such as an energy density, an initial capacity and a capacity retention ratio.

The manufacturing method of the present invention can produce the negative electrode for the lithium ion secondary battery further inexpensively in comparison with other conventional manufacturing methods.

In the granular composite of the present invention, individual particles (A) and individual carbonaceous fibers (C) have contact with each other through a polymer (D) to be integrated, thereby forming substructure (S).

In the particles (A), the particles (B) and the carbonaceous fibers (C), each being a raw material, the individual particles (A), the particles (B) and the carbonaceous fibers (C) are each ordinarily aggregated. If the particles (A), the particles (B), the carbonaceous fibers (C) and the polymer (D) are dry-blended or wet-blended with shear force, and then granulated, the polymer (D) enters into gaps between the individual particles (A), between the individual particles (B) or between the individual carbonaceous fibers (C), and the aggregation thereof is disaggregated, and thus the substructure (S) is formed in which the individual particles (A) and the individual carbonaceous fibers (C) have contact with each other through the polymer (D) to be integrated. Further, at least a part of surface of the individual particles (B) is covered with the substructure (S), and simultaneously each one of the particles (B) has contact with each other through the substructure (S) to be lumped, thereby forming grains. In an electrode layer obtained by mixing the granular composite in such a state with a binder to obtain slurry or paste and allowing the slurry or the paste to adhere to a current collector, distortion in association with expansion and contraction of the particles (A) can be relaxed, deterioration of the particle (A) or cutting of a conductive path can be prevented, and an increase in electric resistance in association with an electrochemical change can be suppressed. Further, a side reaction on surfaces of the particles (A) and the carbonaceous fibers (C) can be suppressed.

### BRIEF DESCRIPTION OF THE DRAWINGS

FIG. 1 is a view that shows a cross-sectional SEM (scanning electron microscope) image of a sample obtained by embedding powder of a granular composite for a lithium ion secondary battery of the present invention into a resin.
FIG. 2 is a view that shows a SEM image showing a surface of powder of a granular composite for a lithium ion secondary battery of the present invention.
FIG. 3 is a view that shows a partially enlarged SEM image in FIG. 2.

### EMBODIMENTS FOR CARRYING OUT THE INVENTION

A granular composite according to one embodiment of the present invention comprises particles (A), particles (B), carbonaceous fibers (C) and a polymer (D).

### "Particles (A)"

The particles (A) to be used in the present invention comprise an element capable of intercalating and deintercalating lithium ions, and comprise no graphite.

Preferred examples of the element capable of intercalating and deintercalating lithium ions comprised in the particles (A) can include Sb, Pb, Ag, Mg, Zn, Ga, Bi, Si, Sn, Ge, Al, In and the like. Among these, Si, Sn, Ge, Al or In is preferred, and from a viewpoint of heat resistance, Si is preferred. The particles (A) may be formed of an elemental substance of the elements, or a compound, a mixture, a eutectic or a solid solution each comprising at least one of the elements. Moreover, the particles (A) in a raw material state, namely, the state before being mixed with the particles (B), the carbonaceous fibers (C) and the polymer (D), may be aggregates of more than one fine particle, namely, secondary particles. Examples of a shape of the particles (A) can include a lump shape, a scale-like shape, a spherical shape, a fibrous shape and the like. Among the above shapes, a spherical shape or a lump shape is preferred.

As a substance comprising Si element, mentioned can be an elemental Si or a substance represented by a general formula: M^{a}ₘSi. The substance is a compound, a mixture, a eutectic or a solid solution, each comprising an element M^{a} at a ratio to be m mol relative to 1 mol of Si.

M^{a} is an element other than Li. Examples of M^{a} can include B, C, N, O, S, P, Na, Mg, Al, K, Ca, Ti, V, Cr, Mn, Fe, Co, Ni, Cu, Zn, Mo, Ru, Rh, Pd, Pt, Be, Nb, Nd, Ce, W, Ta, Ag, Au, Cd, Ga, In, Sb, Ba and the like. In the formula, m is preferably 0.01 or more, further preferably 0.1 or more, and still further preferably 0.3 or more.

Specific examples of the substance comprising Si element can include an elemental Si, an alloy of Si with an alkaline earth metal; an alloy of Si with a transition metal; an alloy of Si with a metalloid; a solid solution alloy or eutectic alloy of Si with Be, Ag, Al, Au, Cd, Ga, In, Sb or Zn; a silicide such as CaSi, CaSi₂, Mg₂Si, BaSi₂, Cu₅Si, FeSi, FeSi₂, CoSi₂, Ni₂Si, NiSi₂, MnSi, MnSi₂, MoSi₂, CrSi₂, Cr₃Si, TiSi₂, Ti₅Si₃, NbSi₂, NdSi₂, CeSi₂, WSi₂, W₅Si₃, TaSi₂, Ta₅Si₃, PtSi, V₃Si, VSi₂, PdSi, RuSi and RhSi; SiO₂, SiC and Si₃N₄ and the like.

Examples of the substance comprising Sn element can include an elemental tin, a tin alloy, tin oxide, tin sulfide, tin halide, stannide and the like. Specific examples of the substance comprising Sn element can include an alloy of Sn with Zn, an alloy of Sn with Cd, an alloy of Sn with In, an alloy of Sn with Pb; tin oxide such as SnO, SnO₂ and M^{b}₄SnO₄ (M^{b} represents a metal element other than Sn); tin sulfide such as SnS, SnS₂ and M^{b}₂SnS₃ (M^{b} represents a metal element other than Sn); tin halide such as SnX₂, SnX₄ and M^{b}SnX₄ (M^{b} represents a metal element other than Sn, and X represents a halogen atom); stannide such as MgSn, Mg₂Sn, FeSn, FeSn₂, MoSn and MoSn₂ and the like.

In the particles (A), a surface thereof is preferably oxidized. This oxidation may be caused by natural oxidation or artificial oxidation. The particles (A) are covered with a thin oxide film by this oxidation.

In the particles (A), a lower limit of a 50% particle diameter (Dₙ₅₀) in a number-based cumulative particle size distribution of primary particles is preferably 5 nm, further preferably 10 nm, and still further preferably 30 nm, and an upper limit of the 50% particle diameter in the number-based cumulative particle size distribution of the primary particles is preferably 1000 nm, further preferably 500 nm, and still further preferably 100 nm.

Moreover, in the particles (A), a 90% particle diameter (Dₙ₉₀) in the number-based cumulative particle size distribution of the primary particles is preferably 200 nm or less.

A primary particle diameter can be measured by observation using a SEM (scanning electron microscope) or a TEM (transmission electron microscope). Moreover, a primary particle diameter of silicon-containing composite particles can be calculated by analyzing images of spherical particles observed by the TEM with 100,000-times magnification.

The particles (A) in the raw material state are ordinarily a mixture of the primary particles and aggregates (namely, the secondary particles) of the primary particles. The particles (A) in the raw material state may have peaks each in the range of 0.1 µm to 1 µm and in the range of 10 µm to 100 µm in the number-based particle size distribution as obtained by measurement without distinguishing the primary particles and the secondary particles.

In the granular composite of the present invention, a part of the particles (A) may be distributed in a state of primary particles and another part of them may be distributed in a state of secondary particles (namely, aggregated particles). A 50% particle diameter (Dₙ₅₀) in the number-based cumulative particle size distribution as measured by sorting out only the particles (A) distributed in the state of secondary particles in the granular composite is preferably 10 nm or more and 1000 nm or less.

Further, in the particles (A) in the granular composite, 95% or more of the total number of the particles (A) is preferably included in the range of a particle diameter of 10 nm or more and 400 nm or less in the number-based cumulative particle size distribution as measured without distinguishing the primary particles and the secondary particles.

An amount of the particles (A) comprised in the granular composite of the present invention is preferably 10 parts by mass or more and 350 parts by mass or less, and further preferably 50 parts by mass or more and 350 parts by mass or less, based on 100 parts by mass of the particles (B).

### "Particles (B)"

The particles (B) to be used in the present invention are composed of a substance comprising graphite. The graphite has properties of intercalating and deintercalating lithium ions. Examples of the substance comprising graphite can include a graphite carbon material such as artificial graphite, pyrolytic graphite, expanded graphite, natural graphite, scale-like graphite and the like.

In the particles (B), a 50% particle diameter (Dᵥ₅₀) in the volume-based cumulative particle size distribution is preferably 2 µm or more and 40 µm or less, further preferably 2 µm or more and 30 µm or less, and still further preferably 3 µm or more and 20 µm or less. If the 50% particle diameter is 2 µm or more, an electrode density is easily increased. Moreover, if the 50% particle diameter is 40 µm or less, a diffusion length of lithium ions in a solid is not excessively prolonged to cause no reduction of output characteristics. Therefore, in the particles (B), 90% or more of the total number of the particles (B) is preferably included in the range of a particle diameter of 1 µm or more and 50 µm or less, and 90% or more of the total number of the particles (B) is preferably included in the range a particle diameter of 5 µm or more and 50 µm or less, in the number-based particle size distribution.

Moreover, in the particles (B), a 10% particle diameter (Dᵥ₁₀) in the volume-based cumulative particle size distribution is preferably 1 µm or more, and further preferably 2 µm or more. In addition, the particle size distribution of the particles (B) is measured by a laser diffraction particle size distribution analyzer. This particle size distribution is determined without distinguishing the primary particles and the secondary particles.

The particles (B) to be used in the present invention have d₀₀₂ of preferably 0.337 nm or less, and further preferably 0.336 nm or less. Moreover, the particles (B) have L_{c} of preferably 50 nm or more, and further preferably 50 nm or more and 100 nm or less. In addition, d₀₀₂ denotes an interplanar spacing of a (002) plane as determined from a 002 diffraction line in powder X-ray diffraction, and L_{C} denotes a size of a crystallite in a c axis direction as determined from the 002 diffraction line in the powder X-ray diffraction.

The particles (B) to be used in the present invention have a BET specific surface area of preferably 1 m²/g or more and 10 m²/g or less, and further preferably 1 m²/g or more and 7 m²/g or less.

The particles (B) to be used in the present invention have a median of aspect ratios (major diameter/minor diameter) in the number-based cumulative distribution of preferably 1.4 or more and 3.0 or less, and further preferably 1.4 or more and 2.0 or less. On a surface of the particles (B) having such an aspect ratio distribution, a large number of flat portions and recess portions tend to exist.

In order to manufacture the particles (B) to be used in the present invention, coal-based coke and/or petroleum-based coke can be used as the raw material. The particles (B) to be used in the present invention are preferably formed by heat-treating the coal-based coke and/or petroleum-based coke at a temperature of preferably 2,000°C or higher, and further preferably 2,500°C or higher. An upper limit of the heat treatment temperature is, though not particularly limited, preferably 3,200°C. The heat treatment is preferably carried out under an inert atmosphere. In the heat treatment, a conventional Acheson graphitization furnace or the like can be used.

With regard to an amount of the particles (B) comprised in the granular composite of the present invention, a lower limit thereof is preferably 400 parts by mass, and an upper limit thereof is preferably 810 parts by mass, and further preferably 600 parts by mass, based on 100 parts by mass of the total amount of the particles (A) and the carbonaceous fibers (C).

### "Carbonaceous fibers (C)"

The carbonaceous fibers (C) to be used in the present invention are a fibrous carbon material. Examples of the carbonaceous fibers (C) can include pitch-based carbon fibers, PAN-based carbon fibers, carbon fibers, carbon nanofibers, carbon nanotubes and the like. From a viewpoint of minimizing an additive amount of the carbonaceous fibers, carbon nanotubes are preferably employed.

The carbonaceous fibers (C) to be used in the present invention have an average fiber diameter of 2 nm or more and 40 nm or less, preferably 5 nm or more and 40 nm or less, and further preferably 7 nm or more and 20 nm or less. The carbonaceous fibers (C) having the fiber diameter of 2 nm or more are easily disentagled into individual fibers dispersed. Moreover, the carbonaceous fibers (C) having the fiber diameter of 40 nm or less are easily prepared by a supported catalyst method.

Examples of the carbonaceous fibers (C) to be used in the present invention can include carbon nanotubes having a tubular structure in which a sheet of graphene comprised of a six-membered carbon ring is rolled in parallel to a fiber axis, carbon nanotubes having a platelet structure in which a sheet of graphene comprised of a six-membered carbon ring is arranged perpendicularly to the fiber axis, carbon nanotubes having a herringbone structure in which a sheet of graphene comprised of a six-membered carbon ring is rolled at an angle oblique to the fiber axis, and the like. Among the above carbonaceous fibers, carbon nanotubes having a tubular structure are preferred in view of electric conductivity and mechanical strength.

The carbonaceous fibers (C) per se may be linear without twist, or may be curved in a meandering manner. In the carbonaceous fibers curved in the meandering manner, contact efficiency with the particles (A) in the granular composite is satisfactory in the same amount of addition, and therefore uniform complex formation with the particles (A) can be easily achieved even by addition of a small amount. Moreover, the carbonaceous fibers (C) curved in the meandering manner have high followability to a shape change, and therefore it is considered that contact with the particles (A) is maintained even during expansion of the particles (A), and a network between the fibers is hard to discontinue.

An aspect ratio of the carbonaceous fibers (C) is preferably 10 or more and 15000 or less, and further preferably 200 or more and 15000 or less.

If the aspect ratio is 10 or more, a degree of entanglement of the fibers with each other is not excessively weakened, and an efficient conductive network is formed. If the aspect ratio is 15000 or less, the degree of entanglement of the fibers with each other is not excessively strengthened, and good dispersibility is obtained. Here, the aspect ratio means a ratio of an average fiber length to an average fiber diameter.

A BET specific surface area of the carbonaceous fibers (C) is preferably 150 m²/g or more and 300 m²/g or less, further preferably 240 m²/g or more and 280 m²/g or less, and still further preferably 250 m²/g or more and 270 m²/g or less. A tap density of the carbonaceous fibers (C) is, though not particularly limited, preferably 0.001 to 0.1 g/cm³, and preferably 0.005 to 0.08 g/cm³. Here, the tap density refers to an apparent density obtained after tapping the fibers 50 times at an amplitude of 2 mm using TAPDENSER KYT-4000K manufactured by Seishin Enterprise Co., Ltd.

Moreover, a lattice constant Co value of the carbonaceous fibers (C) is preferably 0.680 nm or more and 0.690 nm or less. If the Co value is 0.680 nm or more, the carbonaceous fibers (C) have flexibility and aggregates thereof are easily disentangled.

An oxidation onset temperature of the carbonaceous fibers (C) is preferably 400°C or higher and 550°C or lower. Here, the oxidation onset temperature refers to a temperature when a weight is decreased by 0.1% based on an initial weight (charge amount) upon raising the temperature from room temperature to 1000°C at 10°C/min under air flow on a thermobalance. If the oxidation onset temperature is 400°C or higher, crystal defects in the carbonaceous fibers are minor.

In the carbonaceous fibers (C), consolidation specific resistance at a compression density of 0.8 g/cm³ is preferably 0.014 Ω·cm or more and 0.020 Ω·cm or less. If the consolidation specific resistance at the compression density of 0.8 g/cm³ is 0.014 Ω·cm or more, moderate flexibility is obtained. Moreover, if the consolidation specific resistance is 0.020 Ω·cm or less, an electric conductivity-imparting effect is large.

The carbonaceous fibers (C) to be used in the present invention are, though not particularly limited by a synthesis process therefor, preferably synthesized by a gas phase process. Among the gas phase processes, the carbonaceous fibers (C) synthesized by a supported catalyst process are preferred.

The supported catalyst process is a method in which the carbonaceous fibers are manufactured by reacting a carbon source in a gas phase using a catalyst formed by supporting a catalyst metal on an inorganic carrier.

Examples of the inorganic carrier can include alumina, magnesia, silica-titania, calcium carbonate and the like. The inorganic carrier is preferably in a granular form. Examples of the catalyst metal can include iron, cobalt, nickel, molybdenum, vanadium and the like. Supporting can be performed by impregnating a carrier with a solution of a compound comprising a catalyst metal element, by causing coprecipitation using a solution of a compound comprising a catalyst metal element and a compound comprising an element constituting the inorganic carrier, or by other publicly-known supporting methods.

Examples of the carbon source can include methane, ethylene, acetylene and the like. The reaction can be performed in a reactor such as a fluidized bed reactor, a moving bed reactor, a fixed bed reactor or the like. A temperature during the reaction is preferably set at 500°C to 800°C. A carrier gas can be used in order to feed the carbon source into the reactor. Examples of the carrier gas can include hydrogen, nitrogen, argon and the like. A reaction duration is preferably 5 to 120 minutes.

An amount of the carbonaceous fibers (C) comprised in the granular composite of the present invention is 10 parts by mass or more and 40 parts by mass or less based on 100 parts by mass of the particles (A).

Moreover, the amount of the carbonaceous fibers (C) comprised in the granular composite of the present invention is preferably 0.1 part by mass or more and 20 parts by mass or less, and further preferably 0.5 part by mass or more and 5 parts by mass or less, based on 100 parts by mass of the total amount of the particles (A) and the particles (B). If the amount of the carbonaceous fibers (C) is 20 parts by mass or less based on 100 parts by mass of the total amount of the particles (A) and the particles (B), the coulombic efficiency during aging and the coulombic efficiency during a cycle test are increased. On the other hand, if the amount of the carbonaceous fibers (C) is 0.1 part by mass or more based on 100 parts by mass of the total amount of the particles (A) and the particles (B), electric resistance of the negative electrode is reduced and the capacity retention ratio during the cycle test is enhanced.

### "Polymer (D)"

The polymer (D) to be used in the present invention comprises a polysaccharide or a derivative thereof, comprising an unsubstituted or substituted glucopyranose ring.

The unsubstituted glucopyranose ring comprised in the polysaccharide or the derivative thereof is represented by a formula (1).

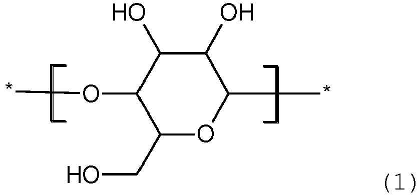

The asterisk "*" represents a bonding hand. The bracket "[ ]" represents that a structure in the bracket is repeated.

The substituted glucopyranose ring is a ring in which hydrogen atoms in the unsubstituted glucopyranose ring are wholly or partially substituted by a substituent. As the substituent, a polar substituent is preferred because an effect of reducing the electric resistance of the negative electrode can be expected. Examples of the substituent can include an alkyl group, a carboxyl group, a sulfonate group, a phosphate group, an amino group, an ammonium base, an alkyleneoxy group, an alkoxy group, a hydroxyl group, a carboxyalkyl group, a hydroxyalkyl group, an acetyl group, a nitro group, a cyanoalkyl group and the like. The alkyl group in which the number of carbon atoms is 1 to 2 is preferred. When the ring has a plurality of substituents, the substituents may be the same group or different groups.

Examples of the polysaccharide or derivative thereof can include cellulose, starch, carboxyalkyl cellulose, alkyl cellulose, hydroxyalkyl cellulose, carboxyalkyl starch, alkyl starch, hydroxyalkyl starch and the like. Among these, mentioned can be carboxymethyl cellulose, hydroxyethyl cellulose, carboxyethyl cellulose, methyl cellulose, ethyl cellulose, cyanoethyl cellulose, oxyethyl cellulose and the like. Among these, carboxymethyl cellulose or hydroxyethyl cellulose is preferred in view of excellent chemical stability.

The polysaccharide or the derivative thereof may be used alone or in combination with two or more.

The polysaccharide or the derivative thereof comprised in the polymer (D), has a viscosity in 1 mass% aqueous solution at 25°C of ordinarily 300 mPa·s or more and 6000 mPa·s or less, and preferably 1000 to 2500 mPa·s. If the viscosity is within the range, surface fracture of the particles (B) in the negative electrode can be suppressed.

Here, the viscosity in 1 mass% aqueous solution at 25°C refers to viscosity as measured at a rotation number of 60 rpm using a No. 4 rotor in a B type viscometer (Brookfield viscometer).

The polysaccharide or the derivative thereof comprised in the polymer (D) has a weight average molecular weight of preferably 1.0 × 10⁴ to 6.0 × 10⁵, and further preferably 5.0 × 10⁴ to 6.0 × 10⁵. If the weight average molecular weight is within the range, performance of dispersing the particles (A) and the carbonaceous fibers (C) is improved. The weight average molecular weight can be determined as a value converted into an equivalent of a standard sample such as pullulan using gel permeation chromatography.

An amount of the polymer (D) comprised in the granular composite of the present invention is preferably 10 parts by mass or more and 100 parts by mass or less based on 100 parts by mass of the particles (A).

Moreover, the amount of the polymer (D) is preferably 2 parts by mass or more and 50 parts by mass or less based on 100 parts by mass of the total amount of the particles (A), the particles (B) and the carbonaceous fibers (C).

If the amount of the polymer (D) is 50 parts by mass or less based on the total amount of the particles (A), the particles (B) and the carbonaceous fibers (C), the electric resistance of the negative electrode increases and the capacity retention ratio during the cycle test is enlarged. If the amount of the polymer (D) is 2 parts by mass or more based on the total amount of the particles (A), the particles (B) and the carbonaceous fibers (C), a portion uncovered with the polymer (D) is not caused in the particles (A) and the carbonaceous fibers (C), and therefore no side reaction by the particles (A) and the carbonaceous fibers (C) occurs, and reduction of the coulombic efficiency during aging and reduction of the coulombic efficiency during the cycle test are small.

### "Other components"

The granular composite of the present invention may further comprise conductive carbon particles. The conductive carbon particles used in the present invention have a number-average diameter of primary particles of preferably 20 nm or more and 100 nm or less, and further preferably 30 nm or more and 50 nm or less. Examples of the conductive carbon particles can include carbon black conductive particles such as acetylene black, furnace black, Ketjenblack and the like. Adding of the conductive carbon particles tends to improve the initial capacity of the lithium ion secondary battery.

An amount of the conductive carbon particles that can be comprised in the granular composite of the present invention is preferably 0.1 part by mass or more and 10 parts by mass or less based on 100 parts by mass of the total amount of the particles (A) and the particles (B).

The binder is usually used for preparing the negative electrode. The granular composite of the present invention contains no binder. In the present invention, a combination (slurry or paste) is preferably prepared by mixing the granular composite of the present invention and the binder, and the negative electrode is produced using the combination.

### "Granular composite"

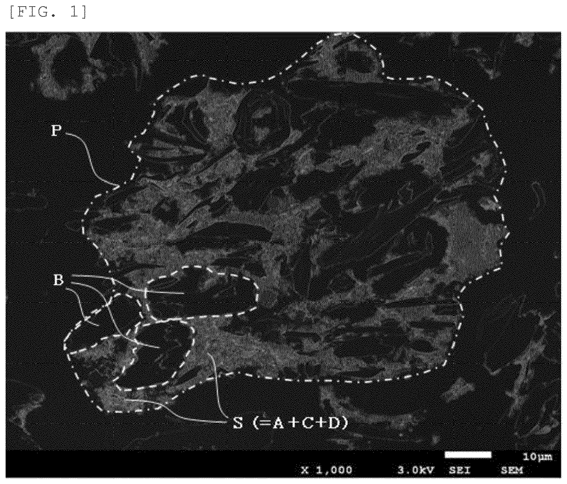

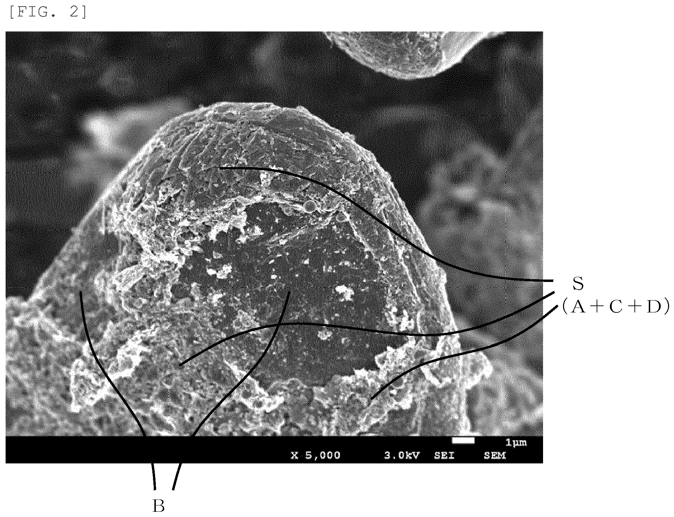

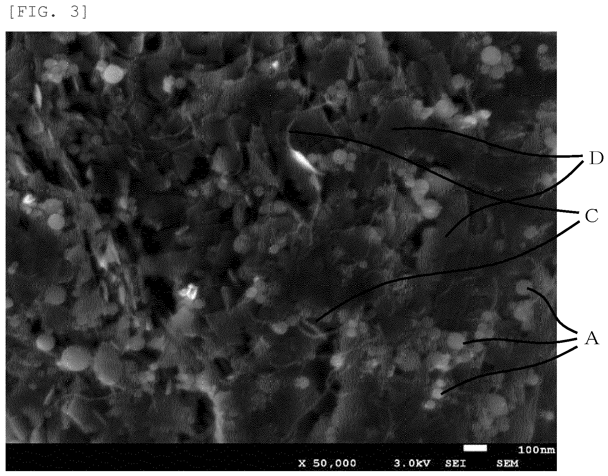

In one embodiment of the granular composite of the present invention, as shown in the SEM image in FIG. 3, each one of the particles (A) (Si particles in FIG. 3) and each one of the carbonaceous fibers (C) have contact with each other through the polymer (D) to be integrated, thereby forming a substructure (S). In the substructure (S), the individual particles (A) and the individual carbonaceous fibers (C) are preferably substantially uniformly distributed. Then, at least a part of surface of individual particles (B) (artificial graphite particles in FIG. 2 and FIG. 3) is covered with the substructure (S) (see FIG. 2), and simultaneously the individual particles (B) have contact with each other through the substructure (S) to form the granular composite (P in the figure) (see FIG. 1).

In the above-described substructure (S), as is different from a case where a matrix resin in a resin composite surrounds a filler without any gaps, the polymer (D) loosely surrounds and hold the particles (A) and the carbonaceous fibers (C) in a state of leaving the gaps, as is shown in the SEM image in FIG. 3 (the SEM image obtained by observing the substructure (S) by further increasing the magnification than the magnification of the SEM image in FIG. 2).

Moreover, in the above-described substructure (S), a three-dimensional entangled network structure is preferably formed by one or more of the carbonaceous fibers (C). In such a three-dimensional entangled network structure, the carbonaceous fibers (C) are entangled with low density to form a three-dimensional network structure, as in cotton wool.

Further, the particles (A) are preferably included in the above-described three-dimensional entangled network structure. The three-dimensional entangled network structure has a cage-like space surrounded by one or more of the carbonaceous fibers (C) constituting the structure, and the particles (A) are taken into this space. It is considered that a conductive path is formed between the carbonaceous fibers (C) and the particles (A) by this configuration.

The above-described substructure (S) tends to be easily adhered to the flat portion or the recess portion of the particles (B). Then, the substructure (S) preferably surrounds the circumference of the particles (B).

In addition, in the granular composite of the present invention, the polymers (D) are interposed in a mutual relationship among the individual particles (A), the individual particles (B) and the individual carbonaceous fibers (C), but as described in Examples described later, a sufficiently low IR drop (internal resistance) value is obtained in evaluation by a half-cell using an electrode layer to which the granular composite of the present invention is applied. For this reason, it is considered that the polymer (D) interposed between the particles (A), between the particles (B) and between the carbonaceous fibers (C) or in the mutual relationship thereamong does not hinder electric conduction therebetween.

In the granular composite of the present invention, as described above, the polymer (D) is interposed in the mutual relationship among the individual particles (A), the individual particles (B) and the individual carbonaceous fibers (C). Thus, it is assumed to absorb distortion by a volume change of the particles (A) in association with intercalation or deintercalation of lithium ions to prevent fracture of the conductive path in the mutual relationship among the individual particles (A), the individual particles (B) and the individual carbonaceous fibers (C). Moreover, it is assumed that the polymer (D) contributes to prevention of the particles (A) from dropping from the granular composite, and also suppression of the side reaction on the surfaces of the particles (A) and the carbonaceous fibers (C). As a result, the lithium ion secondary battery having the negative electrode as prepared using the granular composite of the present invention has a high energy density and can balance a high initial capacity and a high capacity retention ratio.

The granular composite of the present invention has a BET specific surface area of preferably 10 m²/g or less, and further preferably 8 m²/g or less.

Moreover, a tap density of the granular composite is preferably 0.40 to 0.95 g/cm³, and further preferably 0.55 to 0.70 g/cm³. In the granular composite of the present invention, a 50% diameter Dᵥ₅₀ in the volume-based cumulative particle size distribution is preferably 10 to 95 µm, and further preferably 10 to 25 µm.

A method for manufacturing the granular composite according to the present invention is not particularly limited as long as the structure is obtained in which the substructure (S) composed of the particles (A), the carbonaceous fibers (C) and the polymer (D) covers at least a part of the surface of the particles (B), as described above, and the individual particles (B) have contact with each other through the substructure (S). Examples of the method for manufacturing the granular composite according to the present invention can include a liquid phase blending process, a dry blending process and the like. Among the above processes, a liquid phase blending process is preferred.

Dry blending or liquid phase blending is further preferably performed by a method contributing to uniform dispersion of solid substances, particularly the polymer (D), by proving a target substance with mechanical energy such as collision energy, compression energy, shear energy and the like.

In the method for manufacturing the granular composite according to the present invention, for example, the particles (A), the particles (B), the carbonaceous fibers (C) and the polymer (D), and when necessary a liquid medium such as water are mixed, and blended using a blending machine capable of applying shear force (shearing stress) thereto.

Examples of a liquid phase blending equipment can include a planetary mixer, a thin-film rotating-type high speed mixer, a universal mixer, a powder suction continuous dissolving dispersion equipment and the like. In order to provide the target substance with the shear force, for example, a peripheral speed at a tip of an agitating blade is set to preferably 10 m/s or more, and further preferably 20 m/s or more. A blending duration is, though not particularly limited, preferably 2 minutes or more and less than 30 minutes.

Examples of a dry blending equipment can include a hybridizer, a dry particle composing machine, Wonder Blender, a screw kneader, Loedige Mixer, a planetary mixer, a universal mixer and the like. In order to provide the target substance with the shear force, for example, a peripheral speed at a tip of an agitating blade is set to preferably 10 m/s or more, and further preferably 20 m/s or more. A blending duration is, though not particularly limited, preferably 6 minutes or more and less than 30 minutes.

The particles (A) and the carbonaceous fibers (C) in the raw material state are ordinarily aggregated, but the aggregation is disaggregated by the blending as described above. Further, the polymer (D) enters into spaces between the individual particles (A) and the individual carbonaceous fibers (C), each being disaggregated, and the substructure (S) is formed, and the particles (A) and the carbonaceous fibers (C) are suppressed from being aggregated again. Then, the substructure (S) enwraps the individual particles (B) coexisting in the blend, and the structure in which the individual particles (B) have contact with each other through the substructure (S) is obtained. The granular composite of the present invention can be obtained by removing the liquid medium from the resultant by drying operation, when necessary.

In order to manufacture the negative electrode of the lithium ion secondary battery, the granular composite according to the present invention is mixed with the binder to produce the slurry or the paste, for example. Viscosity of the slurry or the paste can be adjusted by addition of a liquid medium thereto, or the like in order to facilitate to adhere the slurry or the paste to the current collector.

The negative electrode according to the present invention is a lamination of the current collector and the electrode layer comprising the binder and the granular composite of the present invention. The negative electrode according to the present invention is generally formed in a planar shape as in a sheet. The sheet preferably has flexibility to an extent at which the sheet can be folded or rolled into a roll shape.

Examples of the current collector can include a conductive planar base material such as nickel foil, copper foil, nickel mesh, copper mesh and the like. Moreover, the current collector may comprise the conductive planar base material and a conductive layer laminated thereon. As the conductive layer, mentioned can be a layer composed of a binder and an electric conductivity-imparting agent such as conductive carbon particles and the like.

Examples of the binder that can be used in the electrode layer or the conductive layer can include polyethylene, polypropylene, an ethylene-propylene terpolymer, butadiene rubber, styrene butadiene rubber, butyl rubber, acrylic rubber, a high ionic conductive polymer compound, and the like. Examples of the high ionic conductive polymer compound can include polyvinylidene fluoride, polyethylene oxide, polyepichlorohydrin, polyphosphazene, polyacrylonitrile and the like. An amount of the binder in the electrode layer is preferably 0.5 to 100 parts by mass based on 100 parts by mass of the granular composite.

The electric conductivity-imparting agent that can be used in the conductive layer is not particularly limited as long as the agent plays a role of imparting the electric conductivity between the electrode layer and the current collector. Examples thereof can include vapor grown carbon fiber (for example, "VGCF" (registered trademark), manufactured by SHOWA DENKO K.K.), conductive carbon (for example, "DENKA BLACK", manufactured by Denka Company Limited; "Super C65", "Super C45" and "KS6L", all manufactured by TIMCAL Ltd.), and the like.

The electrode layer can be obtained by allowing the slurry or the paste comprising the binder and the granular composite of the present invention to adhere to the current collector, for example. The slurry or the paste can be obtained by kneading the granular composite and the binder, and when necessary the liquid medium, for example. The slurry or the paste is formed into a shape such as a sheet shape, a pellet shape or the like, and a shaped product obtained can also be pressure-bonded and adhered to the current collector.

The liquid medium is not particularly limited, and examples thereof can include N-methyl-2-pyrrolidone, dimethylformamide, isopropanol, water and the like. In the case of the binder in which water is used as the liquid medium, a thickening agent is preferably used simultaneously therewith. An amount of the liquid medium is adjusted so as to have the viscosity at which the slurry or the paste is easily coated onto the current collector.

A method for coating the slurry or the paste is not particularly limited. A thickness of the electrode layer is ordinarily 50 to 200 µm. If the thickness of the electrode layer is excessively large, an electrode sheet cannot be housed in a standardized battery container in several cases. The thickness of the electrode layer can be adjusted according to an amount of coating the slurry or the paste. Moreover, the thickness can also be adjusted by drying the slurry or the paste and then performing pressure forming. Examples of a pressure forming process can include a roll press forming process, a flat plate press forming process and the like.

In the electrode layer to which the granular composite according to the present invention is applied, volume resistivity during being not pressed as measured by a four-point probe measurement is preferably 0.5 Ω·cm or less. It is considered that the reason why such volume resistivity is achieved by using the granular composite of the present invention is that the particles (A), the particles (B), the carbonaceous fibers (C), and the conductive carbon particles used when necessary are moderately entangled with each other, are free from large aggregates, and uniformly dispersed thereinto, and a dense conductive network is formed.

An apparent density of the electrode layer of the negative electrode according to the present invention is preferably 1.2 to 1.8 g/cm³, further preferably 1.4 to 1.8 g/cm³, and still further preferably 1.6 to 1.7 g/cm³. Here, the apparent density is expressed in terms of a value obtained by subtracting a weight of the current collector from a weight of the negative electrode per 1 cm², and dividing the resulting value by a thickness of the negative electrode layer excluding a thickness of the current collector.

### (Lithium ion secondary battery)

The lithium ion secondary battery according to the present invention has at least one selected from the group consisting of a nonaqueous electrolytic solution and a nonaqueous polymer electrolyte, a positive electrode sheet and a negative electrode sheet. For the negative electrode sheet, a sheet-shaped negative electrode comprising the granular composite of the present invention can be used.

For the positive electrode sheet used in the present invention, a sheet comprising a positive active material can be used. For use in the positive active material, one or two or more of arbitrary materials can be appropriately selected from materials (materials capable of intercalating and deintercalating lithium ions) conventionally publicly-known as the positive active material in a lithium-based battery. Among the above materials, lithium-containing metal oxide capable of intercalating and deintercalating lithium ions is preferred. Examples of this lithium-containing metal oxide can include complex oxide comprising a lithium element, and at least one element selected from Co, Mg, Cr, Mn, Ni, Fe, Al, Mo, V, W, Ti and the like. Specific examples of the positive electrode active material can include LiNiO₂, LiCoO₂, LiMn₂O₄, LiNi_{0.34}Mn_{0.33}Co_{0.33}O₂, LiFePO₄ and the like.

The nonaqueous electrolytic solution and the nonaqueous polymer electrolyte to be used in the lithium ion secondary battery are not particularly limited. Examples thereof can include an organic electrolytic solution formed by dissolving lithium salt such as LiClO₄, LiPF₆, LiAsF₆, LiBF₄, LiSO₃CF₃, CH₃SO₃Li, CF₃SO₃Li and the like in a nonaqueous solvent such as ethylene carbonate, diethyl carbonate, dimethyl carbonate, ethyl methyl carbonate, propylene carbonate, butylene carbonate, acetonitrile, propionitrile, dimethoxyethane, tetrahydrofuran, γ-butyrolactone and the like; a gel-like polymer electrolyte comprising polyethylene oxide, polyacrylonitrile, polyvinylidene fluoride, polymethyl methacrylate and the like; and a solid-like polymer electrolyte comprising a polymer having an ethylene oxide bond, and the like.

Moreover, a small amount of a substance that causes a decomposition reaction during first-time charge to the lithium ion secondary battery may be added to the electrolytic solution. Examples of the substance can include vinylene carbonate (VC), biphenyl, propane sultone (PS), fluoroethylene carbonate (FEC), ethylene sulfite (ES) and the like. The additive amount thereof is preferably from 0.01 to 30% by mass.

In the lithium ion secondary battery of the present invention, a separator can be provided between the positive electrode sheet and the negative electrode sheet. Examples of the separator can include a non-woven fabric, cloth, a microporous film or a combination thereof, and the like, each comprising polyolefin such as polyethylene, polypropylene and the like as a main component.

Examples of the present invention are shown below and the present invention is more specifically described. These Examples are only illustrations for explanation and the scope of the present invention is not at all limited by these Examples.

### Example 1

First, 0.45 g of Si particles (Dᵥ₉₀: 200 nm or less, Dₙ₅₀ of secondary particles: 100 nm, 95% or more thereof existing in 10 to 400 nm in a number-based particle size distribution), 0.18 g of carbon nanotubes (CNT: prepared by vapor grown method; the range of fiber diameters: 10 nm or more and 15 nm or less and the range of aspect ratios: 300 or more and 450 or less, a BET specific surface area: 260 m²/g, oxidation onset temperature: 500°C, consolidation specific resistance at 0.8 g/cm³: 0.019 Ω·cm), 0.45 g of carboxymethyl cellulose (CMC, Grade 1380, manufactured by Daicel Corporation, viscosity in 1 mass% aqueous solution at 25°C: 1,380 mPa·s), 3.42 g of graphite particles (SCMG (registered trademark), manufactured by SHOWA DENKO K.K., a median of an aspect ratio in the number-based cumulative distribution: 1.56), and 30 mL of water were subjected for 5 minutes to processing using a mixer (FILMIX Model 40-L, manufactured by PRIMIX Corporation) at an agitating blade tip speed of 40 m/s to obtain a composite gel (1) composed of the Si particles, the CNT, the CMC and the SCMG (see Table 1) .

Next, the composite gel (1) was dried at 80°C under vacuum overnight. Then, the dried product was ground in an agate mortar to obtain a granular composite A having Dᵥ₅₀ of 23 µm.

The granular composite A had a BET specific surface area based on nitrogen adsorption of 2.43 m²/g and a tap density of 0.61 g/cm³ (Table 1).

The observation of the granular composite A with a SEM (scanning electron microscope) are shown in FIG. 1 to 3. FIG. 1 shows a cross-sectional SEM image of a sample obtained by embedding the granular composite A in a resin. In the figure, P (a region enclosed by a dot-and-dash line) shows one particle of the granular composite, and a plurality of graphite particles (B) (a part thereof is enclosed by a dashed line) are observed therein. Moreover, existence of whitish regions (found to be a substructure (S) configured by Si particles (A), carbonaceous fibers (C) and a polymer (D) by observation using a SEM with higher magnification) is observed in a circumference of the graphite particle and between the graphite particles.

FIG. 2 shows a SEM image obtained by observation by enlarging surfaces of the graphite particles (B). In the figure, observed is the surfaces of the graphite particle (B) being partially covered with whitish regions (S). FIG. 3 shows a SEM image obtained by observing the whitish regions (S) with higher magnification. FIG. 3 shows that the whitish region (S), namely, the substructure (S) is formed in such a manner that the polymer (D) loosely surrounds the Si particles (A, whitish particles having a diameter of approximately 100 nm) and the carbonaceous fibers (C, observed only partially because the most is covered with the polymer) in a state of remaining gaps.

To 1.552 g of the granular composite A, 0.1 g of ethylene-vinyl acetate-acrylic acid copolymer aqueous emulsion ("Polysol" (registered trademark), manufactured by SHOWA DENKO K.K.), 1.6 g of carboxymethyl cellulose (CMC, Grade 1380, manufactured by Daicel Corporation), and 1.6 g of purified water were added to prepare slurry. The slurry was coated on copper foil, and a solvent was removed by drying at 50°C under normal pressure to obtain an electrode sheet. This electrode sheet was pressed at 20 t for 20 seconds. An apparent density of the electrode obtained was 1.63 g/cm³.

The electrode sheet was punched to obtain a working electrode having a size of 20 mm × 20 mm. A nickel lead was welded to the working electrode.

In a glove box maintained in a dried argon gas atmosphere having a dew point of -80°C or lower, the following operation was performed.

A polypropylene plate (40 mm × 40 mm), the above-described working electrode (20 mm × 20 mm), a separator (40 mm × 35 mm), Li foil for a counter electrode (25 mm × 30 mm), and a polypropylene plate (40 mm × 40 mm) were stacked in this order. One sheet of a laminate packaging material (140 mm × 100 mm) was folded in half to be 70 mm × 100 mm, the stacked product was tucked into an interspace of the folded laminate packaging material, and one short side (70 mm) of the folded laminate packaging material was heat-sealed.

Li foil for a reference electrode (10 mm × 30 mm) was inserted into the interspace from a long side (100 mm) (not heat-sealed) of the folded laminate packaging material, and was arranged in such a manner that the Li foil for the reference electrode was bought into contact with a surface of the separator close to the working electrode . In addition, the Li foil for the reference electrode is not brought into contact with the working electrode. Then, the long side (100 mm) of the packaging material was heat-sealed.

From the other short side (not heat-sealed) of the laminate packaging material, 500 µL of an electrolytic solution (electrolyte: 1M LiPF₆, solvent: EC/FEC/EMC/DEC = 2/1/5/2 (volume ratio); manufactured by Kishida Chemical Co., Ltd.) was injected into the interspace. Then, the above-described other short side of the laminate packing material was heat-sealed while vacuuming to obtain a three-electrode laminate-type half-cell for evaluation.

### <Aging Treatment>

Aging treatment was carried out as described below.

The half-cell obtained was set to a charging and discharging apparatus, and a constant current discharge was performed from rest potential to 10 mV at 300 µA/g. Then, a constant current charge was performed at 300 µA/g, and cut off at 1.0 V. Coulombic efficiency upon the aging treatment was 88.1%.

### <Cycle test>

The aging-treated half-cell was set to the charging and discharging apparatus, and a constant current discharge was performed from rest potential to 10 mV at 6.0 mA/g, and a constant voltage discharge was performed after the voltage reached 10 mV, and cut off at 30 mA/g. Then, a constant current charge was performed at 6.0 mA/g, and cut off at 1.0 V. This charge and discharge cycle was repeated 100 times.

Measurement was carried out on a charge capacity at the first cycle, a charge capacity at the 100th cycle, a ratio of a charge capacity at the 100th cycle to the charge capacity at the first cycle (100-cycle capacity retention ratio), an average value of coulombic efficiency between the second cycle and the 40th cycle, and an average value of coulombic efficiency between the 90th cycle and the 100th cycle. The results are shown in Table 2.

Moreover, a potential drop (IR drop) between a time of cutting off the constant current charge in the 20th cycle and a time after 30 minutes thereof was measured. The IR drop was 0.020 V. Further, the value of IR drop mainly reflects internal resistance of the battery, and a value of IR drop is smaller at smaller value of electric resistance of an electrode layer comprising the granular composite.

### Example 2

A granular composite B having Dᵥ₅₀ of 21 µm was obtained in the same manner as that of Example 1 except that carboxymethyl cellulose (CMC, Grade 1380, manufactured by Daicel Corporation) was replaced by hydroxyethyl cellulose (HEC, Grade SP850, manufactured by Daicel Corporation, viscosity in 1 mass% aqueous solution at 25°C: 2,600 mPa·s). The granular composite B had a BET specific surface area based on nitrogen adsorption of 2.59 m²/g and a tap density of 0.61 g/cm³ (Table 1).

A half-cell was prepared and aging treatment and cycle test were performed in the same manner as that of Example 1 except that the granular composite A was replaced by the granular composite B. An apparent density of an electrode was 1.64 g/cm³. The results are shown in Table 2. A SEM image of a cross section of the electrode was similar to the images shown in FIGs. 1 to 3. Coulombic efficiency upon the aging treatment was 87.9%. IR drop was 0.019 V.

### Comparative Example 1

First, 0.45 g of Si particles (the same as in Example 1), 0.45 g of carboxymethyl cellulose (the same as in Example 1), 3.6 g of graphite particles (the same as in Example 1) and 30 mL of water were subjected to mixing process using a mixer (FILMIX Model 40-L) under the same conditions as those of Example 1 to obtain a composite gel (2) composed of the Si particles, the CMC and the SCMG (Table 1).

Next, the composite gel (2) was dried at 80°C under vacuum overnight. Then, the dried product was ground in an agate mortar to obtain a granular composite C having Dᵥ₅₀ of 19 µm. The granular composite C had a BET specific surface area based on nitrogen adsorption of 4.31 m²/g and a tap density of 0.67 g/cm³ (Table 1).

A half-cell was prepared and aging treatment and cycle test were performed in the same manner as that of Example 1 except that the granular composite A was replaced by the granular composite C. An apparent density of an electrode was 1.65 g/cm³. The results are shown in Table 2. Coulombic efficiency upon the aging treatment was 88.2%. IR drop was 0.031 V. The results show that a charge capacity and a capacity retention ratio are low. It is assumed that the reason is that a conductive network by carbonaceous fibers is not formed in the granular composite C, and resistance is high.

### Comparative Example 2

First, 0.45 g of Si particles (the same as in Example 1), 0.18 g of Ketjenblack (KB, provided by Lion Corporation), 0.45 g of carboxymethyl cellulose (the same as in Example 1), 3.42 g of graphite particles (the same as in Example 1) and 30 mL of water were subjected to mixing process using a mixer (FILMIX Model 40-L) under the same conditions as those of Example to obtain a composite gel (3) composed of the Si particles, the KB, the CMC and the SCMG (Table 1).

Next, the composite gel (3) was dried at 80°C under vacuum overnight. Then, the dried product was ground in an agate mortar to obtain a granular composite D having Dᵥ₅₀ of 20 µm.

The granular composite D had a BET specific surface area based on nitrogen adsorption of 3.89 m²/g and a tap density of 0.62 g/cm³ (Table 1).

A half-cell was prepared and aging treatment and cycle test were performed in the same manner as that of Example 1 except that the granular composite A was replaced by the granular composite D. An apparent density of an electrode was 1.63 g/cm³. The results are shown in Table 2. Coulombic efficiency upon the aging treatment was 86.4%. IR drop was 0.024 V. An average value of the coulombic efficiency is low. It is assumed that the reason is that a side reaction occurs on a surface of the Ketjenblack having a large specific surface area in the granular composite D.

### Comparative Example 3

First, 0.45 g of Si particles (the same as in Example 1), 0.18 g of carbon nanotubes (the same as in Example 1), 3.87 g of graphite particles (the same as in Example 1) and 30 mL of water were subjected to mixing process using a mixer (FILMIX Model 40-L) under the same conditions as those of Example 1 to obtain a composite gel (4) composed of the Si particles, the CNT and the SCMG (Table 1).

Next, the composite gel (4) was dried at 80°C under vacuum overnight. Then, the dried product was ground in an agate mortar to obtain a granular composite E having Dᵥ₅₀ of 16 µm.

The granular composite E had a BET specific surface area based on nitrogen adsorption of 21.39 m²/g and a tap density of 0.55 g/cm³ (Table 1).

A half-cell was prepared and aging treatment and cycle test were performed in the same manner as that of Example 1 except that the granular composite A was replaced by the granular composite E. An apparent density of an electrode was 1.65 g/cm³. The results are shown in Table 2. Coulombic efficiency upon the aging treatment was 83.9%. IR drop was 0.022 V. An average value of a capacity retention ratio and the coulombic efficiency is low. It is assumed that the reason is that the CMC does not surround and protect the Si particles and the like in the granular composite E, and therefore the Si particles drop or a side reaction occurs on a Si/CNT surface.

### Comparative Example 4

A granular composite F having Dᵥ₅₀ of 14 µm was obtained in the same manner as that of Example 1 except that carboxymethyl cellulose (CMC, Grade 1380, manufactured by Daicel Corporation) was replaced by alginic acid. The granular composite F had a BET specific surface area based on nitrogen adsorption of 4.77 m²/g and a tap density of 0.56 g/cm³ (Table 1).

A half-cell was prepared and aging treatment and cycle test were performed in the same manner as that of Example 1 except that the granular composite A was replaced by the granular composite F. An apparent density of an electrode was 1.68 g/cm³. The results are shown in Table 2. Coulombic efficiency upon the aging treatment was 87.3%. IR drop was 0.034 V. It is assumed that a charge capacity or the like is low because Li-ion conductivity is low in the granular composite F.

### Comparative Example 5

A granular composite G having Dᵥ₅₀ of 16 µm was obtained in the same manner as that of Example 1 except that carboxymethyl cellulose (CMC, Grade 1380, manufactured by Daicel Corporation, viscosity in 1 mass% aqueous solution at 25°C: 1,380 mPa·s) was replaced by carboxymethyl cellulose (CMC, Grade 2280, viscosity in 1 mass% aqueous solution at 25°C: 13,000 mPa·s). The granular composite G had a BET specific surface area based on nitrogen adsorption of 10.31 m²/g and a tap density of 0.63 g/cm³ (Table 1) .

A half-cell was prepared and aging treatment and cycle test were performed in the same manner as that of Example 1 except that the granular composite A was replaced by the granular composite G. An apparent density of an electrode was 1.67 g/cm³. The results are shown in Table 2. Coulombic efficiency upon the aging treatment was 85.1%. IR drop was 0.021 V. It is assumed that the coulombic efficiency was reduced because strong shear force occurs during mixing with the CMC solution having high viscosity, and a surface of the graphite was fractured and a specific surface area was increased in the granular composite G.

### Comparative Example 6

A granular composite H having Dᵥ₅₀ of 17 µm was obtained in the same manner as that of Example 1 except that a weight of carboxymethyl cellulose (CMC, Grade 1380) was changed to 0.04 g, and a weight of graphite particles (the same as in Example 1) was changed to 3.83 g. The granular composite H had a BET specific surface area based on nitrogen adsorption of 12.61 m²/g and a tap density of 0.62 g/cm³ (Table 1).

A half-cell was prepared and aging treatment and cycle test were performed in the same manner as that of Example 1 except that the granular composite A was replaced by the granular composite H. An apparent density of an electrode was 1.61 g/cm³. The results are shown in Table 2. Coulombic efficiency upon the aging treatment was 83.6%. IR drop was 0.024 V. It is assumed that, as an amount of the CMC was relatively decreased, the CMC was unable to completely cause covering of the Si particles, the SCMG and the CNT, in other words, a state was formed in which the Si particles, the SCMG and the CNT were not brought into contact with each other through the CMC, and various side reactions were induced.

### [Table 1]

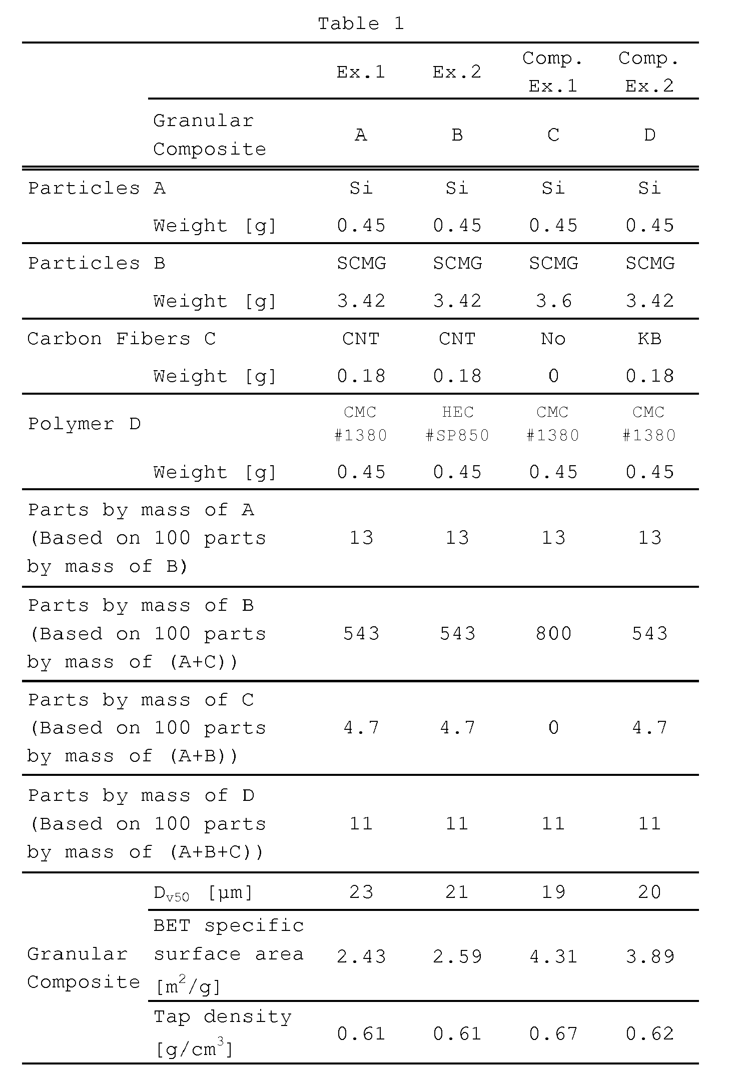

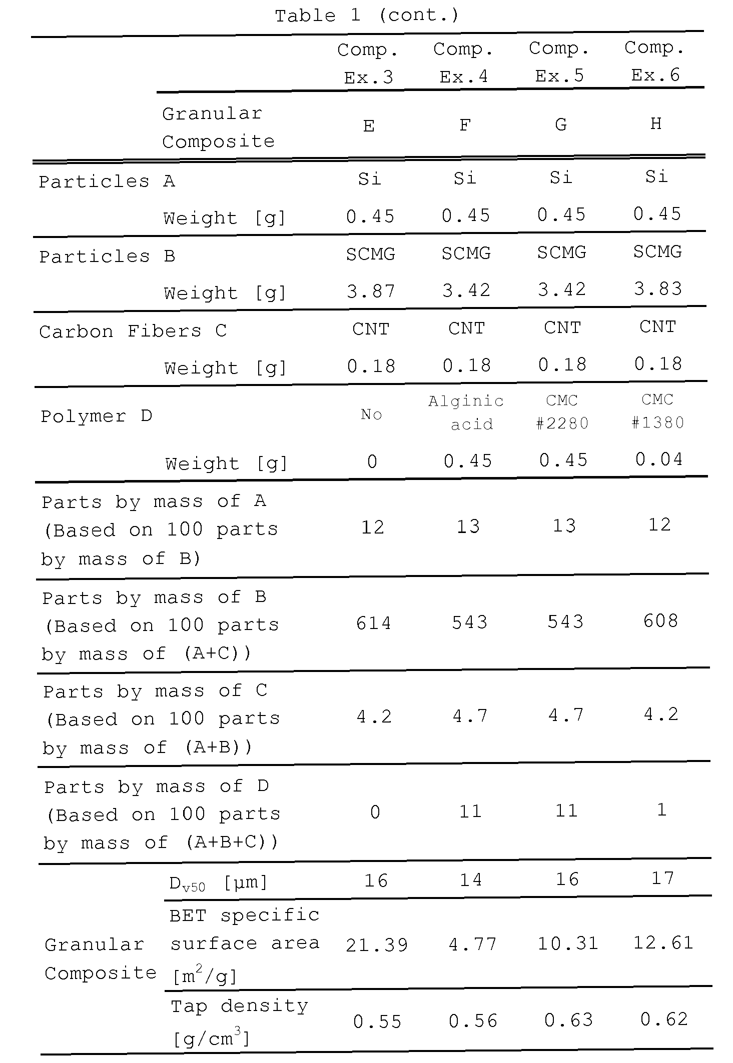

### [Table 2]

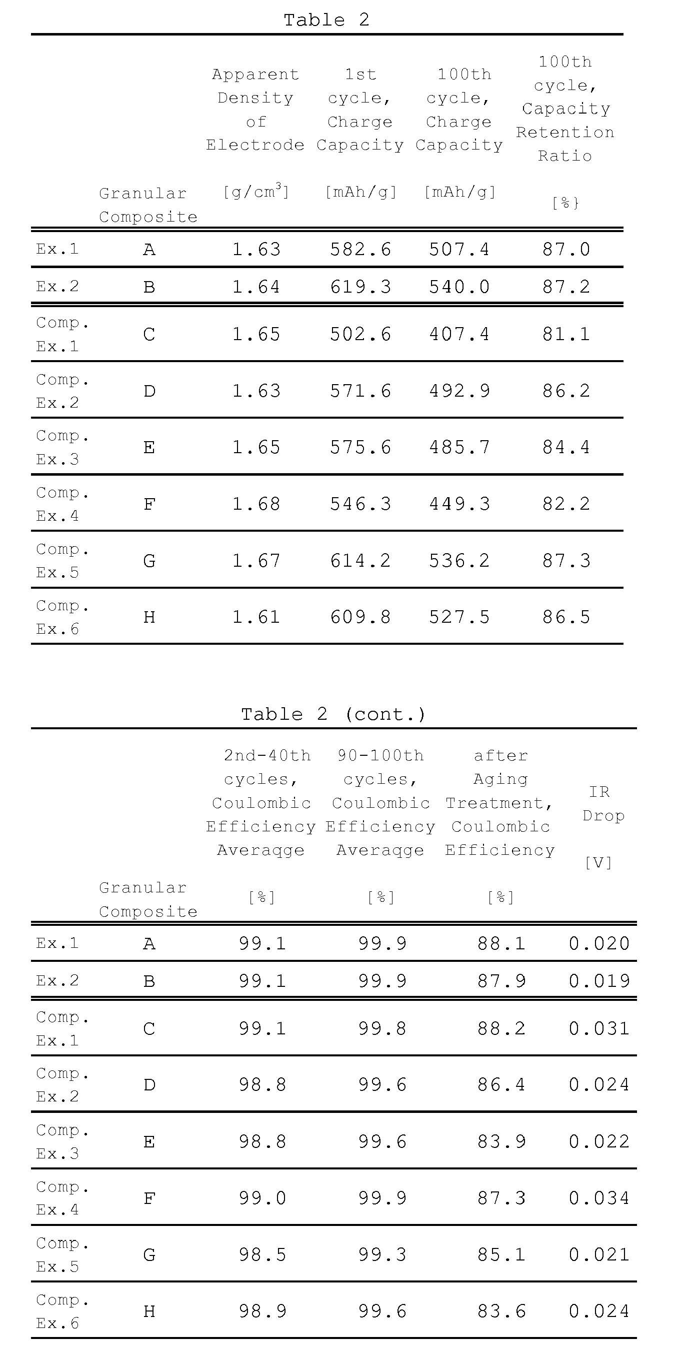

### Example 3

A granular composite I having Dᵥ₅₀ of 21 µm was obtained in the same manner as that of Example 1 except that the Si particles were replaced by Sn particles (Dᵥ₉₀: 200 nm or less, Dₙ₅₀: 80 nm, Dₙ₅₀ of secondary particles: 120 nm, 95% or more existing in 10 to 400 nm in a number-based particle size distribution). The granular composite I had a BET specific surface area based on nitrogen adsorption of 2.31 m²/g and a tap density of 0.58 g/cm³ (Table 3) .

A half-cell was prepared and aging treatment and cycle test were performed in the same manner as that of Example 1 except that the granular composite A was replaced by the granular composite I. An apparent density of an electrode was 1.63 g/cm³. The results are shown in Table 4. Coulombic efficiency upon the aging treatment was 87.9%. IR drop was 0.019 V.

### Example 4

A granular composite J having Dᵥ₅₀ of 23 µm was obtained in the same manner as that of Example 3 except that carboxymethyl cellulose (CMC, Grade 1380, manufactured by Daicel Corporation) was replaced by hydroxyethyl cellulose (HEC, Grade SP850, manufactured by Daicel Corporation). The granular composite J had a BET specific surface area based on nitrogen adsorption of 2.67 m²/g and a tap density of 0.63 g/cm³ (Table 3).

A half-cell was prepared and aging treatment and cycle test were performed in the same manner as that of Example 1 except that the granular composite A was replaced by the granular composite J. An apparent density of an electrode was 1.67 g/cm³. The results are shown in Table 4. Coulombic efficiency upon the aging treatment was 87.8%. IR drop was 0.021 V.

### Comparative Example 7

A granular composite K having Dᵥ₅₀ of 22 µm was obtained in the same manner as that of Comparative Example 1 except that the Si particles were replaced by Sn particles (the same as in Example 3). The granular composite K had a BET specific surface area based on nitrogen adsorption of 4.34 m²/g and a tap density of 0.65 g/cm³ (Table 3).

A half-cell was prepared and aging treatment and cycle test were performed in the same manner as that of Example 1 except that the granular composite A was replaced by the granular composite K. An apparent density of an electrode was 1.65 g/cm³. The results are shown in Table 4. Coulombic efficiency upon the aging treatment was 88.3%. IR drop was 0.032 V.

### Comparative Example 8

A granular composite L having Dᵥ₅₀ of 24 µm was obtained in the same manner as that of Comparative Example 2 except that the Si particles were replaced by Sn particles (the same as in Example 3). The granular composite L had a BET specific surface area based on nitrogen adsorption of 3.99 m²/g and a tap density of 0.64 g/cm³ (Table 3).

A half-cell was prepared and aging treatment and cycle test were performed in the same manner as that of Example 1 except that the granular composite A was replaced by the granular composite L. An apparent density of an electrode was 1.66 g/cm³. The results are shown in Table 4. Coulombic efficiency upon the aging treatment was 86.5%. IR drop was 0.024 V.

### Comparative Example 9

A granular composite M having Dᵥ₅₀ of 22 µm was obtained in the same manner as that of Comparative Example 3 except that the Si particles were replaced by Sn particles (the same as in Example 3). The granular composite M had a BET specific surface area based on nitrogen adsorption of 22.65 m²/g and a tap density of 0.57 g/cm³ (Table 3).

A half-cell was prepared and aging treatment and cycle test were performed in the same manner as that of Example 1 except that the granular composite A was replaced by the granular composite M. An apparent density of an electrode was 1.68 g/cm³. The results are shown in Table 4. Coulombic efficiency upon the aging treatment was 83.1%. IR drop was 0.022 V.

### Comparative Example 10

A granular composite N having Dᵥ₅₀ of 19 µm was obtained in the same manner as that of Comparative Example 4 except that the Si particles were replaced by Sn particles (the same as in Example 3). The granular composite N had a BET specific surface area based on nitrogen adsorption of 4.89 m²/g and a tap density of 0.58 g/cm³ (Table 3).

A half-cell was prepared and aging treatment and cycle test were performed in the same manner as that of Example 1 except that the granular composite A was replaced by the granular composite N. An apparent density of an electrode was 1.62 g/cm³. The results are shown in Table 4. Coulombic efficiency upon the aging treatment was 87.2%. IR drop was 0.033 V.

### Comparative Example 11

A granular composite O having Dᵥ₅₀ of 21 µm was obtained in the same manner as that of Comparative Example 6 except that the Si particles were replaced by Sn particles (the same as in Example 3). The granular composite O had a BET specific surface area based on nitrogen adsorption of 9.98 m²/g and a tap density of 0.65 g/cm³ (Table 3).

A half-cell was prepared and aging treatment and cycle test were performed in the same manner as that of Example 1 except that the granular composite A was replaced by the granular composite O. An apparent density of an electrode was 1.69 g/cm³. The results are shown in Table 4. Coulombic efficiency upon the aging treatment was 85.3%. IR drop was 0.021 V.

### Comparative Example 12

A granular composite P having Dᵥ₅₀ of 18 µm was obtained in the same manner as that of Comparative Example 6 except that the Si particles were replaced by Sn particles (the same as in Example 3). The granular composite P had a BET specific surface area based on nitrogen adsorption of 14.89 m²/g and a tap density of 0.60 g/cm³ (Table 3).

A half-cell was prepared and aging treatment and cycle test were performed in the same manner as that of Example 1 except that the granular composite A was replaced by the granular composite P. An apparent density of an electrode was 1.67 g/cm³. The results are shown in Table 4. Coulombic efficiency upon the aging treatment was 83.1%. IR drop was 0.023 V.

### [Table 3]

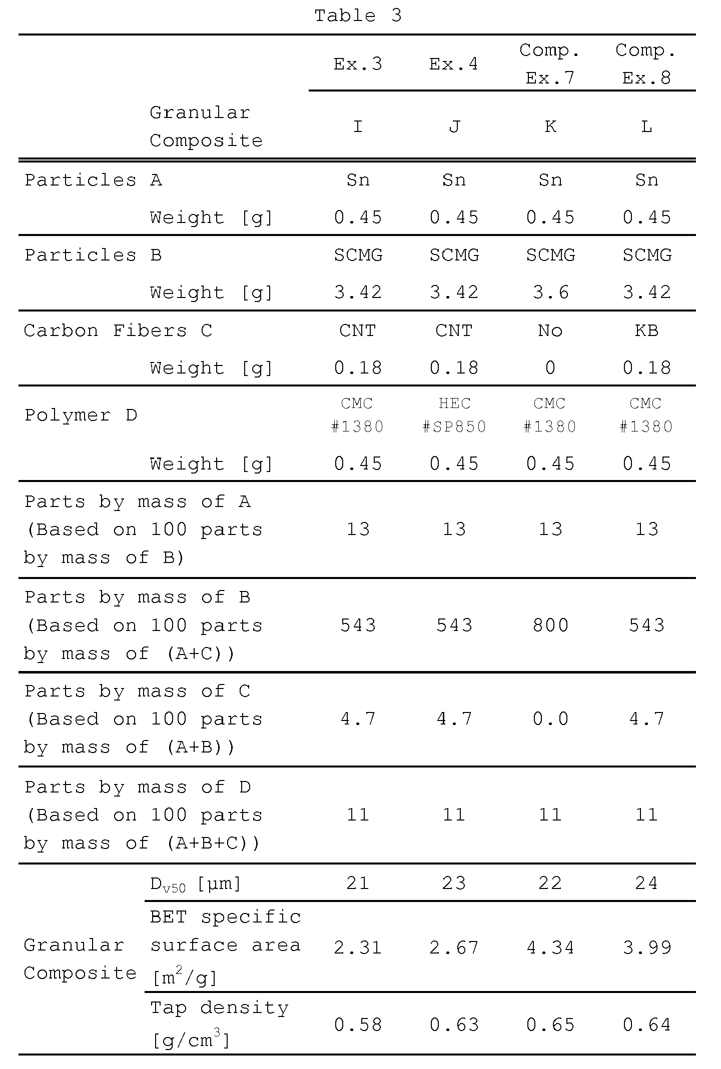

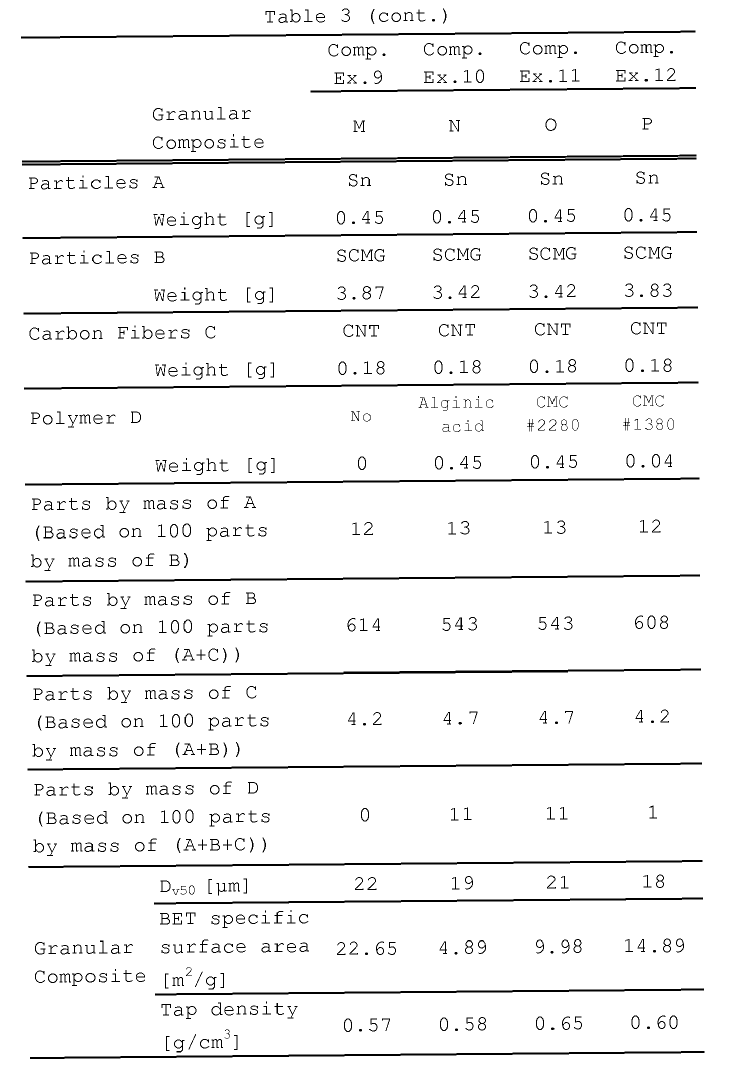

### [Table 4]

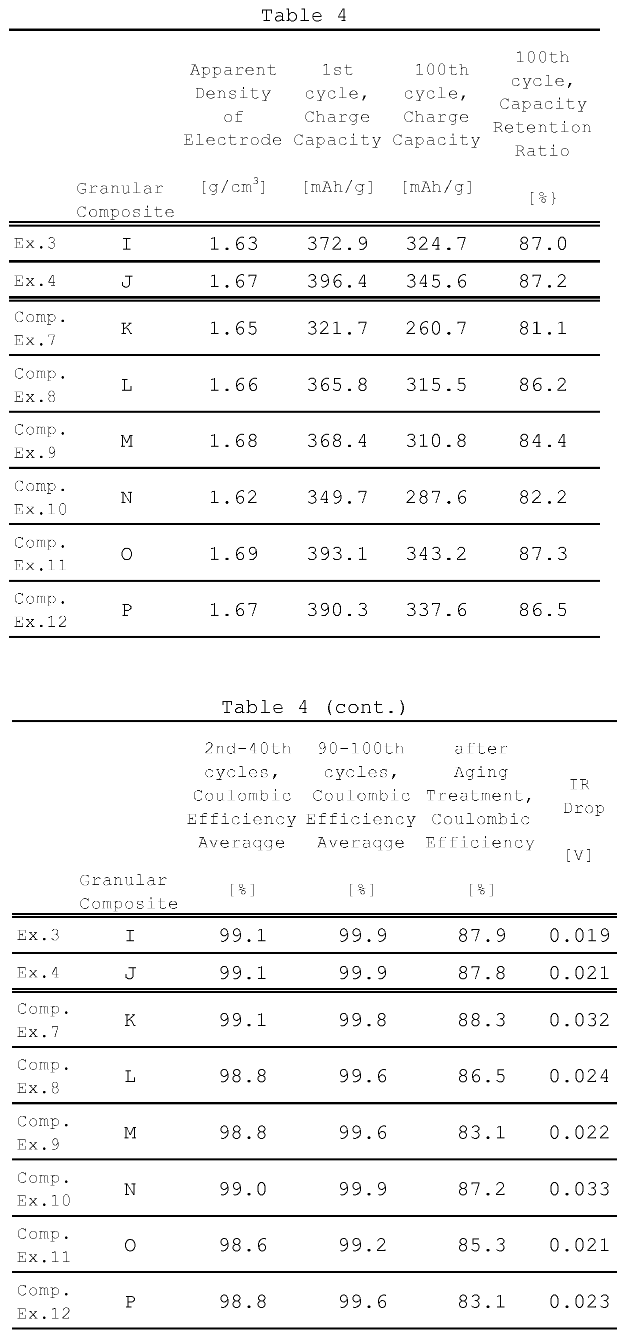

### EXPLANATION OF SYMBOLS

- A:: Si particles
- B:: Graphite particles
- B1:: Exposed portion of graphite particle
- C:: Carbonaceous fibers
- D:: Polymer
- P:: Granular composite
- S:: Substructure

## Claims

1. A granular composite for use in manufacturing a negative electrode of a lithium-ion secondary battery, the composite comprising:
particles (A) composed of a substance comprising an element capable of intercalating and deintercalating lithium ions and comprising no graphite;
particles (B) composed of a substance comprising graphite;
carbonaceous fibers (C); and
a polymer (D) comprising a polysaccharide comprising an unsubstituted or substituted glucopyranose ring or a derivative of the polysaccharide, having a viscosity in 1 mass% aqueous solution at 25°C of not less than 300 mPa·sand not more than 6,000 mPa·s,
wherein an amount of the polymer (D) is not less than 2 parts by mass and not more than 50 parts by mass relative to 100 parts by mass of the total amount of the particles (A), the particles (B) and
the carbonaceous fibers (C);
each one of the particles (A) and each one of the carbonaceous fibers (C) have contact with each other through the polymer (D) to be integrated, thereby forming a substructure (S),
at least a part of surface of each one of the particles (B) is covered with the substructure (S), and each one of the particles (B) has contact with each other through the substructure (S).

2. The granular composite according to claim 1, wherein the unsubstituted or substituted glucopyranose ring is a polar functional group-substituted glucopyranose ring.

3. The granular composite according to claim 2, wherein the polar functional group-substituted glucopyranose ring is a carboxyalkyl group-substituted glucopyranose ring or a hydroxyalkyl group-substituted glucopyranose ring.

4. The granular composite according to claim 1, wherein the polymer (D) comprises at least one selected from the group consisting of carboxyalkyl cellulose, alkyl cellulose and hydroxyalkyl cellulose.

5. The granular composite according to any one of claims 1 to 4, wherein a 90% diameter of the particles (A) in a volume-based cumulative particle size distribution of primary particles is not more than 200 nm.

6. The granular composite according to any one of claims 1 to 5, wherein the carbonaceous fibers (C) comprise carbon nanotubes having an average fiber diameter of not less than 2 nm and not more than 40 nm and an aspect ratio of not less than 10 and not more than 15,000.

7. The granular composite according to any one of claims 1 to 6, wherein an amount of the particles (A) is not less than 10 parts by mass and not more than 350 parts by mass based on 100 parts by mass of the particles (B).

8. The granular composite according to any one of claims 1 to 7, wherein an amount of the carbonaceous fibers (C) is not less than 0.1 part by mass and not more than 20 parts by mass based on 100 parts by mass of the total amount of the particles (A) and the particles (B).

9. The granular composite according to any one of claims 1 to 8, wherein the particles (A) comprise at least one element selected from the group consisting of Si, Sn, Ge, Al and In.

10. The granular composite according to any one of claims 1 to 9, wherein a tap density of the granular composite is 0.40 to 0.95 g/cm³.

11. The granular composite according to any one of claims 1 to 10, wherein a BET specific surface area of the granular composite is not more than 10 m²/g.

12. Slurry or paste, comprising the granular composite according to any one of claims 1 to 11, and a binder.

13. A method for manufacturing a negative electrode for a lithium ion secondary battery, comprising:
mixing particles (A) composed of a substance comprising an element capable of intercalating and
deintercalating lithium ions and comprising no graphite, particles (B) composed of a substance comprising graphite, carbonaceous fibers (C), and a polymer (D) composed of a polysaccharide comprising an unsubstituted or substituted glucopyranose ring or a derivative of the polysaccharide and having a viscosity in 1 mass% aqueous solution at 25°C of not less than 300 mPa·s and not more than 6,000 mPa·s,
in which an amount of the polymer (D) is not less than 2 parts by mass and not more than 50 parts by mass based on 100 parts by mass of the total amount of the particles (A), the particles (B) and the carbonaceous fibers (C), to obtain a granular composite in which each one of the particles (A) and each one of the carbonaceous fibers (C) have contact with each other through the polymer (D) to be integrated, thereby forming a substructure (S), at least a part of surface of each one of the particles (B) is covered with the substructure (S), and each one of the particles (B) has contact with each other through the substructure (S);
mixing a liquid medium, the granular composite and a binder to obtain slurry or paste; and
allowing the slurry or the paste to adhere to a current collector.

14. The method according to claim 13, further comprising heat-treating petroleum-based coke and/or coal-based coke at 2500°C or higher to obtain the particles (B) .

15. A lithium ion secondary battery, comprising a negative electrode formed by lamination of a current collector and an electrode layer comprising the granular composite according to any one of claims 1 to 11 and a binder.

16. The lithium ion secondary battery according to claim 15, wherein an apparent density of the electrode layer is 1.2 to 1.8 g/cm³.
